(19) Europäisches Patentamt
European Patent Office
Office européen des brevets

(11) EP 4 763 913 A1

(12) **EUROPEAN PATENT APPLICATION**
published in accordance with Art. 153(4) EPC

(43) Date of publication:
**24.06.2026 Bulletin 2026/26**

(21) Application number: **24854451.2**

(22) Date of filing: **13.08.2024**

(51) International Patent Classification (IPC):
***C08L 67/02*** *(2006.01)* ***C08L 51/04*** *(2006.01)*
***C08G 63/183*** *(2006.01)* ***C08G 63/672*** *(2006.01)*

(52) Cooperative Patent Classification (CPC):
**C08G 63/183; C08G 63/672; C08L 51/04; C08L 67/02**

(86) International application number:
**PCT/KR2024/012053**

(87) International publication number:
**WO 2025/037900 (20.02.2025 Gazette 2025/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.08.2023 KR 20230106479**

(71) Applicant: **SK Chemicals Co., Ltd.**
**Seongnam-si, Gyeonggi-do 13494 (KR)**

(72) Inventors:
- **YOO, Young-Man**
  **Seongnam-si, Gyeonggi-do 13494 (KR)**
- **KANG, Jaesik**
  **Seongnam-si, Gyeonggi-do 13494 (KR)**
- **HWANG, Eun-Yeong**
  **Seongnam-si, Gyeonggi-do 13494 (KR)**

(74) Representative: **Dehns**
**10 Old Bailey**
**London EC4M 7NG (GB)**

(54) **THERMOPLASTIC POLYESTER ELASTOMER RESIN AND METHOD FOR PRODUCING SAME**

(57) The present invention relates to a thermoplastic polyester elastomer resin, a method for producing same, and products comprising same, the thermoplastic polyester elastomer resin having good elasticity and compression-elasticity recovery as well as high mechanical strength, elongation, and the like. Accordingly, the thermoplastic polyester elastomer resin can be used to produce a variety of products (such as fiber, foam, parts for shoes).



Processed by Luminess, 75001 PARIS (FR)

## Description

### Technical Field

The present invention relates to a thermoplastic polyester elastomer resin comprising a hard segment with thermoplastic properties and a soft segment with elastomeric properties (PO3G and EO-PPG introduced) and having excellent physical properties such as mechanical strength, elasticity, and compression-elastic recovery, and to a process for preparing the same.

### Background Art

A thermoplastic elastomer (TPE) resin comprises a hard segment derived from a thermoplastic polymer having thermoplastic properties and a soft segment derived from an elastomer, a rubber-like material, having elastomeric properties. When compared with conventional thermosetting rubbers, a hard segment physically bonded by crystals is similar to chemical crosslinking called "vulcanization," and a soft segment is similar to amorphous rubber-like properties.

Thermoplastic polyester elastomer (TPEE) resins among TPE resins have high mechanical strength and excellent impact resistance, thermal resistance, flexibility, and moldability; thus, they are used in the preparation of automobile parts, electrical and electronic parts, fibers, and films.

A TPEE resin mainly comprises a crystalline hard segment of tetramethylene ester and an amorphous soft segment of polyether polyol ester. As a raw material for preparing a soft segment of a TPEE resin, polyethylene ether glycol (PEG), poly(1,2-propylene) glycol (PPG), ethylene oxide-adducted polypropylene glycol (EO-PPG), polytetramethylene ether glycol (PTMG), and the like have been used. However, TPEE resins prepared using PEG as a raw material have the disadvantage of having high moisture content, and PPG has low polymerization reactivity; thus, they are not often used as a raw material for preparing TPEE resins. Accordingly, PTMG, EO-PPG, or a combination thereof are mainly used to prepare a soft segment of TPEE resins.

TPEE resins prepared using PTMG as a raw material have good physical properties such as mechanical strength and elongation, whereas there is a limit to increasing physical properties such as elasticity and compression-elastic recovery at the desired level or more. In addition, TPEE resins prepared using EO-PPG as a raw material have high crystallinity, which leads to excellent moldability, whereas they are poor in physical properties such as mechanical strength and elongation.

Accordingly, there is a need to develop a novel TPEE resin that can be used in the preparation of various products as it has excellent physical properties such as mechanical strength and elongation, as well as high elasticity and compression-elastic recovery.

### Disclosure of Invention

### Technical Problem

In order to solve the conventional problems described above, the present inventors have conducted various studies. As a result, it has been discovered that a thermoplastic polyester elastomer (TPEE) resin having excellent mechanical, along with enhanced elasticity and compression-elastic recovery, is obtained by blending two or more polyester elastomer resins with the crystallinity and crystallization rate of the soft segment controlled to a low level while phase separation between the hard segment and the soft segment is prevented.

Accordingly, an object of the present invention is to provide a thermoplastic polyester elastomer resin with excellent mechanical strength, along with excellent elasticity and compression-elastic recovery, and a process for preparing the same.

In addition, another object of the present invention is to provide a composition or an article comprising the thermoplastic polyester elastomer resin.

### Solution to Problem

In order to accomplish the above object, the present invention provides a thermoplastic polyester elastomer resin, which comprises a first polyester elastomer resin comprising a repeat unit (a) represented by the following Formula 1 and a repeat unit (b) represented by the following Formula 2; and a second polyester elastomer resin comprising a repeat unit (a) represented by the following Formula 1 and a repeat unit (c) represented by the following Formula 3:

[Formula 1]

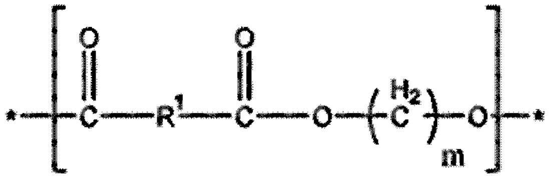

[Formula 2]

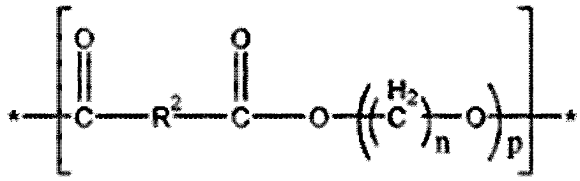

[Formula 3]

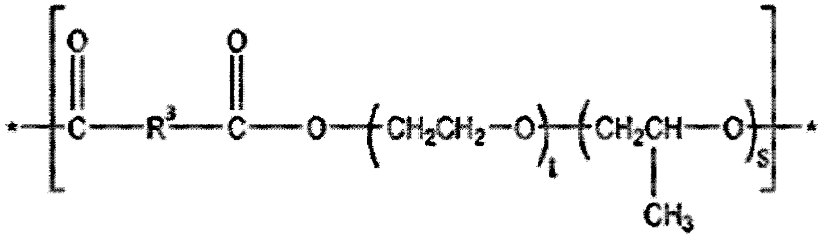

In Formulae 1 to 3, $R^1$ to $R^3$ are each independently a $C_1$ to $C_{12}$ linear, branched, or cyclic divalent aliphatic hydrocarbon group; or a $C_6$ to $C_{12}$ divalent aromatic hydrocarbon group, m is an integer of 2 to 6, n is an integer of 2 to 3, p is an integer of 10 to 30, t is an integer of 1 to 30, and s is an integer of 1 to 40.

In addition, the present invention provides a process for preparing a thermoplastic polyester elastomer resin, which comprises (1-1) reacting a first glycol component, a first dicarboxylic acid component, and a first high molecular weight glycol component to obtain a first polyester elastomer resin; (1-2) reacting a second glycol component, a second dicarboxylic acid component, and a second high molecular weight glycol component to obtain a second polyester elastomer resin; and (1-3) melt-kneading the first polyester elastomer resin and the second polyester elastomer resin, wherein the first polyester elastomer resin comprises a repeat unit (a) represented by the above Formula 1 and a repeat unit (b) represented by the above Formula 2; and the second polyester elastomer resin comprises a repeat unit (a) represented by the above Formula 1 and a repeat unit (c) represented by the above Formula 3.

In addition, the present invention provides a composition, which comprises the thermoplastic polyester elastomer resin.

In addition, the present invention provides an article, which comprises the thermoplastic polyester elastomer resin.

## Advantageous Effects of Invention

In the thermoplastic polyester elastomer resin according to the present invention, a first polyester elastomer resin comprising polytrimethylene ether glycol (PO3G) is adopted in the formation of its soft segment; thus, it can exhibit excellent mechanical strength. In addition, in the thermoplastic polyester elastomer resin according to the present invention, a second polyester elastomer resin comprising ethylene oxide-adducted polypropylene glycol (EO-PPG) is adopted in the formation of its soft segment, in which a methylene side chain is attached to the polyol main chain, which restricts the movement of the polymer chains of the soft segment, creates sufficient free volume between the polymer chains, reduces crystallinity and crystallization rate, and increases incompatibility with the hard segment to expedite phase separation with the hard segment; thus, it can have excellent elasticity and compression-elastic recovery.

As described above, the thermoplastic polyester elastomer resin according to the present invention has excellent mechanical strength, elasticity, and compression-elastic recovery while exhibiting a desired level of hardness; thus, it can be used in the production of various products such as automobile parts, electrical and electronic parts, fibers, films,

matrices, cushioning materials, foams, shoe parts, and the like.

**Best Mode for Carrying out the Invention**

Hereinafter, the present invention will be described in detail. The present invention herein is not limited to the disclosures given below, but it may be modified into various forms as long as the gist of the invention is not changed.

In the present specification, the term "comprising" is intended to specify a particular characteristic, region, step, process, element, and/or component. It does not exclude the presence or addition of any other characteristic, region, step, process, element, and/or component, unless specifically stated to the contrary.

Throughout the present specification, the terms first, second, and the like are used to describe various components. But the components should not be limited by the terms. The terms are used for the purpose of distinguishing one element from another.

All numbers and expressions related to the quantities of components, reaction conditions, and the like used herein are to be understood as being modified by the term "about" unless otherwise indicated.

In a thermoplastic polyester elastomer (TPEE) resin, phase separation takes place due to incompatibility between the crystalline hard segment and the non-crystalline soft segment to form an elastomer matrix, thereby exhibiting rubber-like elastic properties. In order to increase the elastic properties of a thermoplastic polyester elastomer resin, it is required to control the boundary between the hard segment and the soft segment to be clear. Specifically, when the difference in crystallinity and non-crystallinity between the hard segment and the soft segment is increased to enhance incompatibility while the free volume of the polymer chains is enhanced, the phase separation can be achieved more clearly. That is, the hard segment needs to be crystallized as quickly as possible, and the soft segment needs to be induced to crystallize as late as possible. As a result, a thermoplastic polyester elastomer resin with high mechanical strength and excellent elastic properties can be obtained.

Based on the above, a first polyester elastomer resin and a second polyester elastomer resin are blended in the thermoplastic polyester elastomer resin according to the present invention, wherein the first polyester elastomer resin comprising polytrimethylene ether glycol (PO3G) is adopted when a soft segment is formed to control the crystallinity and crystallization rate of the soft segment to a low level, and the second polyester elastomer resin comprising ethylene oxide-adducted polypropylene glycol (EO-PPG) is adopted when the soft segment is formed to increase the incompatibility between the soft segment and the hard segment, resulting in clear phase separation. This is explained in detail as follows.

**Thermoplastic polyester elastomer resin**

The thermoplastic polyester elastomer resin according to the present invention comprises a first polyester elastomer resin comprising a repeat unit (a) represented by the following Formula 1 and a repeat unit (b) represented by the following Formula 2; and a second polyester elastomer resin comprising a repeat unit (a) represented by the following Formula 1 and a repeat unit (c) represented by the following Formula 3.

[Formula 1]

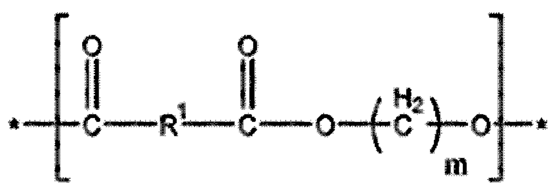

[Formula 2]

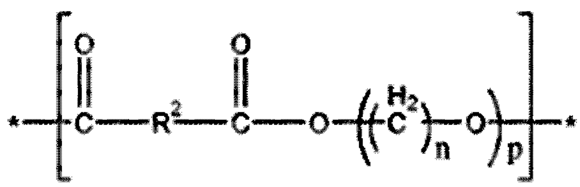

[Formula 3]

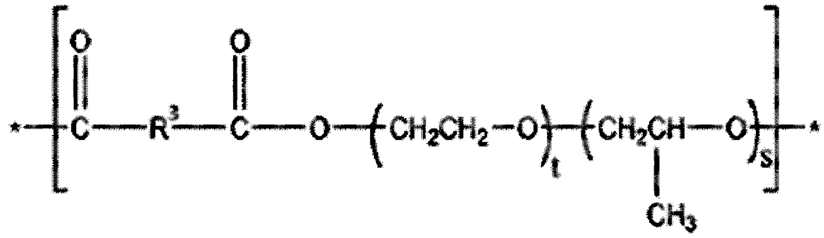

In Formulae 1 to 3, $R^1$ to $R^3$, which are the same as, or different from, each other, are each independently a $C_1$ to $C_{12}$ linear, branched, or cyclic divalent aliphatic hydrocarbon group; or a $C_6$ to $C_{12}$ divalent aromatic hydrocarbon group, m is an integer of 2 to 6, n is an integer of 2 to 3, p is an integer of 10 to 30, t is an integer of 1 to 30, and s is an integer of 1 to 40.

First polyester elastomer resin

The first polyester elastomer resin according to the present invention serves to increase the mechanical strength of the thermoplastic polyester elastomer resin.

The repeat unit (a) represented by Formula 1 contained in the first polyester elastomer resin may be a repeat unit constituting a hard segment of the first polyester elastomer resin. In Formula 1, $R^1$ may specifically be a $C_5$ to $C_{12}$ cyclic divalent aliphatic hydrocarbon group or a $C_6$ to $C_{12}$ divalent aromatic hydrocarbon group, and m may be an integer of 3 to 5. For example, $R^1$ may be a cyclohexylene group or a phenylene group, and m may be an integer of 4.

The repeat unit (b) represented by Formula 2 contained in the first polyester elastomer resin may be a repeat unit constituting a soft segment of the first polyester elastomer resin. In Formula 2, $R^2$ may specifically be a $C_5$ to $C_{12}$ cyclic divalent aliphatic hydrocarbon group or a $C_6$ to $C_{12}$ divalent aromatic hydrocarbon group. In addition, n may be an integer of 2 or 3, and p may be an integer of 15 to 25. For example, $R^2$ may be a cyclohexylene group or a phenylene group, n may be an integer of 3, and p may be an integer of 18 to 22.

The repeat unit (a) represented by Formula 1 may be derived from a reaction of a glycol component comprising 1,4-butanediol; and a dicarboxylic acid component. The repeat unit (b) represented by Formula 2 may be derived from a reaction of a dicarboxylic acid component; and a high molecular weight glycol component comprising polytrimethylene ether glycol.

Specifically, the first polyester elastomer resin may be a resin obtained by using a dicarboxylic acid component (a first dicarboxylic acid component), a glycol component (a first glycol component), and a high molecular weight glycol component (a first high molecular weight glycol component) as reaction raw materials.

The dicarboxylic acid component (e.g., a dicarboxylic acid, its ester, chloride, or anhydride) may be an aliphatic dicarboxylic acid component, an aromatic dicarboxylic acid component, or a combination thereof.

The aliphatic dicarboxylic acid component may be a linear, branched, or cyclic aliphatic dicarboxylic acid component. The number of carbon atoms of the aliphatic dicarboxylic acid component may be 4 or more, 5 or more, 6 or more, or 7 or more, and may be 20 or less, 15 or less, 13 or less, 12 or less, or 10 or less. Specifically, the number of carbon atoms of the aliphatic dicarboxylic acid component may be 4 to 20, 5 to 15, or 6 to 10.

For example, the aliphatic dicarboxylic acid component may comprise at least one selected from the group consisting of adipic acid, sebacic acid, succinic acid, isodecylsuccinic acid, maleic acid, fumaric acid, glutaric acid, azelaic acid, 1,4-cyclohexanedicarboxylic acid, and 1,3-cyclohexanedicarboxylic acid, but it is not limited thereto.

The number of carbon atoms of the aromatic dicarboxylic acid component may be 6 or more, 7 or more, 8 or more, or 10 or more, and may be 25 or less, 20 or less, or 15 or less. Specifically, the number of carbon atoms of the aromatic dicarboxylic acid component may be 6 to 25, 6 to 15, or 6 to 10.

For example, the aromatic dicarboxylic acid component may comprise at least one selected from the group consisting of terephthalic acid, isophthalic acid, naphthalenedicarboxylic acid, diphenyl dicarboxylic acid, 4,4'-stilbendicarboxylic acid, 2,5-furandicarboxylic acid, 2,5-thiophenedicarboxylic acid, and dimethyl terephthalate, but it is not limited thereto.

Preferably, the dicarboxylic acid component may comprise at least one selected from the group consisting of terephthalic acid and dimethyl terephthalate. The amount (amount added in the reaction) of at least one (at least one component) selected from the group consisting of terephthalic acid and dimethyl terephthalate used is not particularly limited, but it may be 50% by mole or more, 65% by mole or more, 70% by mole or more, 85% by mole or more, 90% by mole or more, or 95% by mole or more, based on the total mole percent of the dicarboxylic acid component (the first dicarboxylic acid component). Specifically, the amount of terephthalic acid, dimethyl terephthalate, or a combination thereof used may be 50 to 100% by mole, 55 to 100% by mole, 60 to 100% by mole, 70 to 100% by mole, 85 to 100% by mole, or 90 to 95% by

mole.

The glycol component may be a component that is subjected to an esterification reaction or a transesterification reaction with the dicarboxylic acid component to form a hard segment of tetramethyl ester (e.g., repeat unit (a) of Formula 1). The number of carbon atoms of the glycol component may be 2 or more, 3 or more, or 4 or more, and may be 15 or less, 12 or less, 10 or less, or 8 or less. Specifically, the number of carbon atoms of the glycol component may be 2 to 15, 3 to 10, 4 to 8, or 4 to 6.

For example, the glycol component may comprise at least one selected from the group consisting of ethylene glycol, 1,3-propanediol, 1,4-butanediol, 1,4-cyclohexanedimethanol, 2-methyl-1,3-propanediol, 2-methylene-1,3-propanediol, 2-ethyl-1,3-propanediol, 2-isopropyl-1,3-propanediol, 2,2-dimethyl-1,3-propanediol, 2,3-butanediol, 3-methyl-1,5-pentanediol, 3-methyl-2,4-pentanediol, 1,6-hexanediol, 1,2-cyclohexanediol, 1,4-cyclohexanediol, diethylene glycol, polyethylene glycol, polypropylene glycol, polytetramethylene glycol, polyhexamethylene glycol, copolymers of ethylene oxide and tetrahydrofuran, polycarbonate diol, polyneopentyl glycol, poly-3-methylpentanediol, and poly-1,5-pentanediol. Specifically, the glycol component may comprise at least one selected from the group consisting of ethylene glycol, 1,3-propanediol, 1,4-butanediol, and 1,4-cyclohexanedimethanol, but it is not limited thereto.

Preferably, the glycol component may comprise 1,4-butanediol. The amount of 1,4-butanediol used (amount added in the reaction) is not particularly limited, but it may be 75% by mole or more, 80% by mole or more, 83% by mole or more, 85% by mole or more, 90% by mole or more, or 95% by mole or more, based on the total mole percent of the glycol component (the first glycol component). Specifically, the amount of 1,4-butanediol used may be 75 to 100% by mole, 80 to 100% by mole, 83 to 100% by mole, 85 to 100% by mole, 90 to 100% by mole, or 90 to 95% by mole.

The number average molecular weight of the glycol component is not particularly limited, but it may be less than 400 g/mole, less than 350 g/mole, less than 300 g/mole, or less than 250 g/mole.

The high molecular weight glycol component may be a component that is subjected to an esterification reaction or a transesterification reaction with the dicarboxylic acid component to form a soft block of poly(alkylene oxide) ester (e.g., repeat (b) of Formula 2). The high molecular weight glycol component may comprise polytrimethylene ether glycol (PO3G). As the high molecular weight glycol component comprises polytrimethylene ether glycol (PO3G), the mechanical strength of the thermoplastic polyester elastomer resin comprising the first polyester elastomer resin obtained therefrom can be significantly enhanced.

Preferably, the high molecular weight glycol component may be composed of polytrimethylene ether glycol (PO3G). The amount of polytrimethylene ether glycol (PO3G) used (amount added in the reaction) is not particularly limited, but it may be 50% by mole or more, 60% by mole or more, 75% by mole or more, 85% by mole or more, 95% by mole or more, or 97% by mole or more, based on the total mole percent of the high molecular weight glycol component (the first high molecular weight glycol component). Specifically, the amount of polytrimethylene ether glycol (PO3G) used may be 50 to 100% by mole, 50 to 99.5% by mole, 60 to 99% by mole, 65 to 95% by mole, 70 to 90% by mole, 75 to 90% by mole, or 75 to 85% by mole.

The number average molecular weight of the high molecular weight glycol component comprising polytrimethylene ether glycol (PO3G) is not particularly limited, but it may be 400 g/mole or more, 500 g/mole or more, 600 g/mole or more, 700 g/mole or more, or 800 g/mole or more, and may be 6,000 g/mole or less, 5,000 g/mole or less, 4,000 g/mole or less, or 3,000 g/mole or less. Specifically, in order to ensure smooth phase separation from the hard segment, the number average molecular weight of the high molecular weight glycol component comprising polytrimethylene ether glycol (PO3G) may be 400 to 5,000 g/mole, 800 to 3,500 g/mole, or 1,000 to 3,000 g/mole.

For example, the number average molecular weight of polytrimethylene ether glycol (PO3G) may be 500 to 4,000 g/mole, 600 to 4,000 g/mole, 800 to 3,500 g/mole, or 1,000 to 3,000 g/mole.

According to the present invention, the first polyester elastomer resin may comprise a structure (repeat unit or structural unit) represented by the following Formula 4 as a repeat unit (a) represented by the above Formula 1 and a repeat unit (b) represented by the above Formula 2 are combined.

[Formula 4]

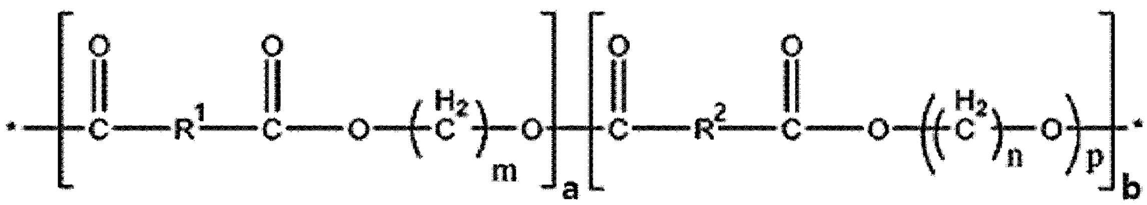

In Formula 4, m, n, and p are the same as described above, and a and b are weight ratios.

In addition, the first polyester elastomer resin may satisfy the following Relationship 1.

[Relationship 1]

$$0.5 \leq a/b \leq 3.0$$

In Relationship 1, a is the weight accounted for by the repeat unit (a) represented by Formula 1 in the first polyester elastomer resin (total weight of the first polyester elastomer resin), and b is the weight accounted for by the repeat unit (b) represented by Formula 2 in the first polyester elastomer resin (total weight of the first polyester elastomer resin).

Specifically, the ratio of a/b in the above Relationship 1 may be 0.6 to 2.9, 0.7 to 2.8, 0.8 to 2.7, 0.9 to 2.6, or 1.0 to 2.5. As the ratio of a/b is within the above range, the mechanical strength of the thermoplastic polyester elastomer resin can be controlled to a desired level.

According to the present invention, the first polyester elastomer resin may have an intrinsic viscosity (IV) of 1.0 dl/g or more, specifically, 1.15 dl/g or more, 1.3 dl/g or more, 1.5 dl/g or more, 1.7 dl/g or more, or 1.8 dl/g or more (e.g., 1.0 to 1.9 dl/g, 1.25 to 1.85 dl/g, or 1.3 to 1.8 dl/g).

In addition, the first polyester elastomer resin may have a tensile strength of 190 $kgf/cm^2$ or more, specifically, 210 $kgf/cm^2$ or more, 220 $kgf/cm^2$ or more, 240 $kgf/cm^2$ or more, 260 $kgf/cm^2$ or more, 280 $kgf/cm^2$ or more, 320 $kgf/cm^2$ or more, or 360 $kgf/cm^2$ or more (e.g., 190 to 390 $kgf/cm^2$, 220 to 380 $kgf/cm^2$, or 250 to 350 $kgf/cm^2$), when measured in accordance with ASTM D638.

Second polyester elastomer resin

The second polyester elastomer resin according to the present invention serves to increase the elasticity and compression-elastic recovery of the thermoplastic polyester elastomer resin.

The repeat unit (a) represented by Formula 1 contained in the second polyester elastomer resin may be a repeat unit constituting a hard segment of the second polyester elastomer resin. In Formula 1, $R^1$ may specifically be a $C_5$ to $C_{12}$ cyclic divalent aliphatic hydrocarbon group or a $C_6$ to $C_{12}$ divalent aromatic hydrocarbon group, and m may be an integer of 3 to 5. For example, $R^1$ may be a cyclohexylene group or a phenylene group, and m may be an integer of 4.

The repeat unit (c) represented by Formula 3 contained in the second polyester elastomer resin may be a repeat unit constituting a soft segment of the second polyester elastomer resin. In Formula 3, $R^3$ may specifically be a $C_5$ to $C_{12}$ cyclic divalent aliphatic hydrocarbon group or a $C_6$ to $C_{12}$ divalent aromatic hydrocarbon group. In addition, t may be an integer of 5 to 25, and s may be an integer of 5 to 35. For example, $R^3$ may be a cyclohexylene group or a phenylene group, t may be an integer of 10 to 20, and s may be an integer of 10 to 30.

The repeat unit (a) represented by Formula 1 may be derived from a reaction of a glycol component comprising 1,4-butanediol; and a dicarboxylic acid component. The repeat unit (c) represented by Formula 3 may be derived from a reaction of a dicarboxylic acid component; and a high molecular weight glycol component comprising ethylene oxide-adducted polypropylene glycol.

Specifically, the second polyester elastomer resin may be a resin obtained by using a dicarboxylic acid component (a second dicarboxylic acid component), a glycol component (a second glycol component), and a high molecular weight glycol component (a second high molecular weight glycol component) as reaction raw materials.

The dicarboxylic acid component (e.g., a dicarboxylic acid, its ester, chloride, or anhydride) may be an aliphatic dicarboxylic acid component, an aromatic dicarboxylic acid component, or a combination thereof.

The aliphatic dicarboxylic acid component may be a linear, branched, or cyclic aliphatic dicarboxylic acid component. The number of carbon atoms of the aliphatic dicarboxylic acid component may be 4 or more, 5 or more, 6 or more, or 7 or more, and may be 20 or less, 15 or less, 13 or less, 12 or less, or 10 or less. Specifically, the number of carbon atoms of the aliphatic dicarboxylic acid component may be 4 to 20, 5 to 15, or 6 to 10.

For example, the aliphatic dicarboxylic acid component may comprise at least one selected from the group consisting of adipic acid, sebacic acid, succinic acid, isodecylsuccinic acid, maleic acid, fumaric acid, glutaric acid, azelaic acid, 1,4-cyclohexanedicarboxylic acid, and 1,3-cyclohexanedicarboxylic acid, but it is not limited thereto.

The number of carbon atoms of the aromatic dicarboxylic acid component may be 6 or more, 7 or more, 8 or more, or 10 or more, and may be 25 or less, 20 or less, or 15 or less. Specifically, the number of carbon atoms of the aromatic dicarboxylic acid component may be 6 to 25, 6 to 15, or 6 to 10.

For example, the aromatic dicarboxylic acid component may comprise at least one selected from the group consisting of terephthalic acid, isophthalic acid, naphthalenedicarboxylic acid, diphenyl dicarboxylic acid, 4,4'-stilbendicarboxylic acid, 2,5-furandicarboxylic acid, 2,5-thiophenedicarboxylic acid, and dimethyl terephthalate, but it is not limited thereto.

Preferably, the dicarboxylic acid component may comprise at least one selected from the group consisting of terephthalic acid and dimethyl terephthalate. The amount (amount added in the reaction) of at least one (at least one component) selected from the group consisting of terephthalic acid and dimethyl terephthalate used is not particularly limited, but it may be 50% by mole or more, 65% by mole or more, 70% by mole or more, 85% by mole or more, 90% by mole

or more, or 95% by mole or more, based on the total mole percent of the dicarboxylic acid component (the second dicarboxylic acid component). Specifically, the amount of terephthalic acid, dimethyl terephthalate, or a combination thereof used may be 50 to 100% by mole, 55 to 100% by mole, 60 to 100% by mole, 70 to 100% by mole, 85 to 100% by mole, or 90 to 95% by mole.

The glycol component may be a component that is subjected to an esterification reaction or a transesterification reaction with the dicarboxylic acid component to form a hard segment of tetramethyl ester (e.g., repeat unit (a) of Formula 1). The number of carbon atoms of the glycol component may be 2 or more, 3 or more, or 4 or more, and may be 15 or less, 12 or less, 10 or less, or 8 or less. Specifically, the number of carbon atoms of the glycol component may be 2 to 15, 3 to 10, 4 to 8, or 4 to 6.

For example, the glycol component may comprise at least one selected from the group consisting of ethylene glycol, 1,3-propanediol, 1,4-butanediol, 1,4-cyclohexanedimethanol, 2-methyl-1,3-propanediol, 2-methylene-1,3-propanediol, 2-ethyl-1,3-propanediol, 2-isopropyl-1,3-propanediol, 2,2-dimethyl-1,3-propanediol, 2,3-butanediol, 3-methyl-1,5-pentanediol, 3-methyl-2,4-pentanediol, 1,6-hexanediol, 1,2-cyclohexanediol, 1,4-cyclohexanediol, diethylene glycol, polyethylene glycol, polypropylene glycol, polytetramethylene glycol, polyhexamethylene glycol, copolymers of ethylene oxide and tetrahydrofuran, polycarbonate diol, polyneopentyl glycol, poly-3-methylpentanediol, and poly-1,5-pentanediol , but it is not limited thereto. Specifically, the glycol component may comprise at least one selected from the group consisting of ethylene glycol, 1,3-propanediol, 1,4-butanediol, and 1,4-cyclohexanedimethanol.

Preferably, the glycol component may comprise 1,4-butanediol. The amount of 1,4-butanediol used (amount added in the reaction) is not particularly limited, but it may be 75% by mole or more, 80% by mole or more, 83% by mole or more, 85% by mole or more, 90% by mole or more, or 95% by mole or more, based on the total mole percent of the glycol component (the second glycol component). Specifically, the amount of 1,4-butanediol used may be 75 to 100% by mole, 80 to 100% by mole, 83 to 100% by mole, 85 to 100% by mole, 90 to 100% by mole, or 90 to 95% by mole.

The number average molecular weight of the glycol component is not particularly limited, but it may be less than 400 g/mole, less than 350 g/mole, less than 300 g/mole, or less than 250 g/mole.

The high molecular weight glycol component may be a component that is subjected to an esterification reaction or a transesterification reaction with the dicarboxylic acid component to form a soft block of poly(alkylene oxide) ester (e.g., repeat (c) of Formula 3). The high molecular weight glycol component may comprise ethylene oxide-adducted polypropylene glycol (EO-PPG). As the high molecular weight glycol component comprises ethylene oxide-adducted polypropylene glycol (EO-PPG), the elasticity and compression-elastic recovery of the thermoplastic polyester elastomer resin can be significantly enhanced.

Preferably, the high molecular weight glycol component may be composed of ethylene oxide-adducted polypropylene glycol (EO-PPG). The amount of ethylene oxide-adducted polypropylene glycol (EO-PPG) used (amount added in the reaction) is not particularly limited, but it may be 50% by mole or more, 60% by mole or more, 75% by mole or more, 85% by mole or more, 95% by mole or more, or 97% by mole or more, based on the total mole percent of the high molecular weight glycol component (the second high molecular weight glycol component). Specifically, the amount of ethylene oxide-adducted polypropylene glycol (EO-PPG) used may be 50 to 100% by mole, 50 to 99.5% by mole, 60 to 99% by mole, 65 to 95% by mole, 70 to 90% by mole, 75 to 90% by mole, or 75 to 85% by mole.

The number average molecular weight of the high molecular weight glycol component comprising ethylene oxide-adducted polypropylene glycol (EO-PPG) is not particularly limited, but it may be 400 g/mole or more, 500 g/mole or more, 600 g/mole or more, 700 g/mole or more, or 800 g/mole or more, and may be 6,000 g/mole or less, 5,000 g/mole or less, 4,000 g/mole or less, or 3,000 g/mole or less. Specifically, in order to ensure smooth phase separation from the hard segment, the number average molecular weight of the high molecular weight glycol component may be 400 to 5,000 g/mole, 800 to 3,500 g/mole, or 1,000 to 3,000 g/mole.

For example, the number average molecular weight of ethylene oxide-adducted polypropylene glycol (EO-PPG) may be 1,000 to 4,000 g/mole, 1,500 to 3,500 g/mole, 2,000 to 3,500 g/mole, or 2,000 to 3,000 g/mole.

According to the present invention, the second polyester elastomer resin may comprise a structure (repeat unit or structural unit) represented by the following Formula 5 as a repeat unit (a) represented by the above Formula 1 and a repeat unit (c) represented by the above Formula 3 are combined.

[Formula 5]

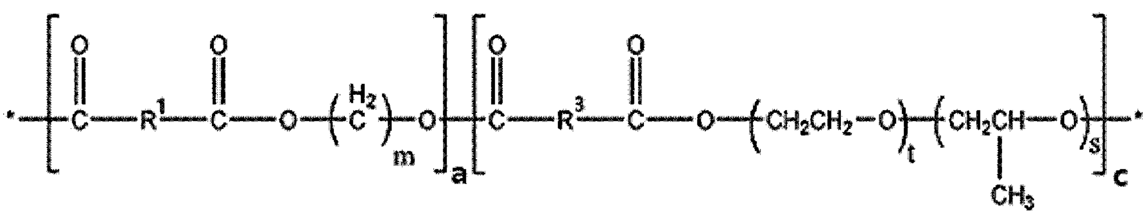

In Formula 5, m, t, and s are the same as described above, and a and c are weight ratios.

In addition, the second polyester elastomer resin may satisfy the following Relationship 2.

[Relationship 2]

$$0.5 \leq a/c \leq 2.5$$

In Relationship 2, a is the weight accounted for by the repeat unit (a) represented by Formula 1 in the second polyester elastomer resin (total weight of the second polyester elastomer resin), and c is the weight accounted for by the repeat unit (c) represented by Formula 3 in the second polyester elastomer resin (total weight of the second polyester elastomer resin).

Specifically, the ratio of a/c in the above Relationship 2 may be 0.6 to 2.4, 0.7 to 2.3, 0.8 to 2.2, 0.9 to 2.1, or 1.0 to 2.0. As the ratio of a/c is within the above range, the elasticity and compression-elastic recovery of the thermoplastic polyester elastomer resin can be optimized to a desired level.

Two or more types of the second polyester elastomer resin may be used. That is, when the properties of the thermoplastic polyester elastomer resin are taken into consideration, a second-1 polyester elastomer resin and a second-2 polyester elastomer resin may be used as the second polyester elastomer resin.

According to the present invention, the second polyester elastomer resin may have an intrinsic viscosity (IV) of 1.0 dl/g or more, specifically, 1.03 dl/g or more, 1.05 dl/g or more, 1.07 dl/g or more, 1.1 dl/g or more, or 1.3 dl/g or more (e.g., 1.0 to 1.5 dl/g, 1.05 to 1.45 dl/g, or 1.25 to 1.4 dl/g).

In addition, the second polyester elastomer resin may have a tensile strength of 100 $kgf/cm^2$ or more, specifically, 105 $kgf/cm^2$ or more, 110 $kgf/cm^2$ or more, 115 $kgf/cm^2$ or more, 120 $kgf/cm^2$ or more, 140 $kgf/cm^2$ or more, 160 $kgf/cm^2$ or more, or 180 $kgf/cm^2$ or more (e.g., 100 to 200 $kgf/cm^2$, 120 to 190 $kgf/cm^2$, or 150 to 180 $kgf/cm^2$), when measured in accordance with ASTM D638.

According to the present invention, the blending ratio of the first polyester elastomer resin and the second polyester elastomer resin contained in the thermoplastic polyester elastomer resin may be a weight ratio of 40:60 to 99:1, 45:55 to 99:1, 50:50 to 98:2, 55:45 to 98:2, 60:40 to 90:10, 65:35 to 90:10, 70:30 to 85:15, or 75:25 to 85:15. As the blending ratio of the first and second polyester elastomer resins is within the above range, a thermoplastic polyester elastomer resin having excellent elasticity and compression-elastic recovery, along with excellent mechanical strength, can be provided.

The thermoplastic polyester elastomer resin may comprise a mixture in which the first polyester elastomer resin and the second polyester elastomer resin are blended, a crosslinked product in which the first polyester elastomer resin and the second polyester elastomer resin are combined, or a combination thereof. Specifically, the thermoplastic polyester elastomer resin may be a blended resin in which the first polyester elastomer resin and the second polyester elastomer resin are blended, a crosslinked resin in which the first polyester elastomer resin and the second polyester elastomer resin are physically or chemically combined (copolymerized thermoplastic polyester elastomer resin), or a resin in which the blended resin and the crosslinked resin are mixed.

According to the present invention, the thermoplastic polyester elastomer resin comprises the first polyester elastomer resin and the second polyester elastomer resin. As a result, it may be a resin that comprises the repeat unit (a), the repeat unit (b), and the repeat unit (c), while the content ratio (weight ratio) between these repeat units is controlled to a specific range.

Specifically, the thermoplastic polyester elastomer resin according to the present invention may satisfy the following Relationship 3. As the thermoplastic polyester elastomer resin satisfies the following Relationship 3, it can have a desired molecular weight, along with higher mechanical strength.

[Relationship 3]

$$0.5 \leq (y + z)/x \leq 3.0$$

In Relationship 3, x is the total weight accounted for by the repeat unit (a) represented by Formula 1 in the thermoplastic polyester elastomer resin (total weight of the thermoplastic polyester elastomer resin), y is the total weight accounted for by the repeat unit (b) represented by Formula 2 in the thermoplastic polyester elastomer resin (total weight of the thermoplastic polyester elastomer resin), and z is the total weight accounted for by the repeat unit (c) represented by Formula 3 in the thermoplastic polyester elastomer resin (total weight of the thermoplastic polyester elastomer resin).

Specifically, in Relationship 3, the ratio of (y + z)/x may be 0.55 to 2.95, 0.65 to 2.90, 0.68 to 2.85, 0.7 to 2.8, 0.75 to 2.7, 0.8 to 2.6, 1 to 2.55, 1.05 to 2.45, 1.08 to 2.4, or 1.1 to 2.3.

In addition, the thermoplastic polyester elastomer resin according to the present invention may satisfy the following Relationship 4. As the thermoplastic polyester elastomer resin satisfies the following Relationship 4, it can have

more excellent elasticity and compression-elastic recovery.

[Relationship 4]

$$0.3 \leq y/z \leq 37$$

In Relationship 4, y is the total weight accounted for by the repeat unit (b) represented by Formula 2 in the thermoplastic polyester elastomer resin (total weight of the thermoplastic polyester elastomer resin), and z is the total weight accounted for by the repeat unit (c) represented by Formula 3 in the thermoplastic polyester elastomer resin (total weight of the thermoplastic polyester elastomer resin).

Specifically, in Relationship 4, the ratio of y/z may be 0.5 to 36.7, 0.55 to 36, 0.58 to 30, 0.6 to 25, 0.8 to 20, 1 to 15, 1.05 to 10, 1.1 to 8, 1.2 to 5, 1.3 to 4.5, or 1.5 to 4.

Meanwhile, the thermoplastic polyester elastomer resin according to the present invention may further comprise a reactive compatibilizer, a bonding structure derived from a reactive compatibilizer, or a combination thereof in order to further enhance elasticity and compression-elastic recovery, along with mechanical strength, elongation, and the like.

The reactive compatibilizer is an additive that prevents phase separation between the respective resin components in a mixture of two or more types of resins and helps improve miscibility by enabling the formation of a stable and long-term continuous phase. Specifically, the reactive compatibilizer is a reactive polymer that is compatible with one resin of a mixture of two resins and reacts with the functional group of the other resin. When it is added to the mixture of two resins (i.e., the first polyester elastomer resin and the second polyester elastomer resin) to carry out a reactive extrusion process, the formation of a block copolymer or a graft copolymer may be induced.

The reactive compatibilizer may be selected from the group consisting of isocyanate compounds, carbodiimide compounds (e.g., polycarbodiimide compounds having two or more of the -N=C=N- structure in the molecule), epoxy compounds, oxazoline compounds, compounds having a glycidyl group, and compounds having a maleic anhydride structure. Here, the isocyanate compound has too high reactivity with moisture; thus, it may be difficult to control reactivity and handling (storage) convenience. The carbodiimide compound is expensive; thus, economic feasibility may be low. In addition, the epoxy compound may have a large difference in reactivity depending on the epoxy equivalent weight and the number of functional groups, making it difficult to control reactivity. The oxazoline compound is less reactive than other compounds; thus, it may be difficult to expect an effect of enhancing miscibility between resin components. Thus, it may be preferable to use a compound having a glycidyl group or a compound having a maleic anhydride structure as a reactive compatibilizer.

The compound having a glycidyl group may specifically be a glycidyl group-modified olefin-based rubber polymer, preferably a polymer in which glycidyl (meth)acrylate is grafted onto a polyolefin-based rubber copolymer (glycidyl (meth)acrylate-grafted polyolefin elastomer). The compound having a maleic anhydride structure may specifically be a polymer in which maleic anhydride is grafted onto a polyolefin-based rubber copolymer (maleic anhydride-grafted polyolefin elastomer).

For example, the reactive compatibilizer may be poly(ethylene-co-methyl acrylate-co-glycidyl methacrylate) having a structure represented by the following Formula 6. In addition, the reactive compatibilizer may be poly(ethylene-co-ethyl acrylate-co-maleic anhydride) having a structure represented by the following Formula 7.

[Formula 6]

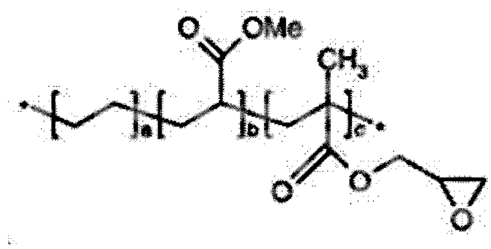

[Formula 7]

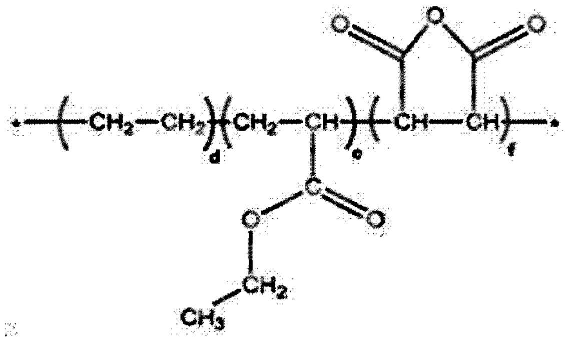

In Formula 6, a is an integer of 116 to 268, b is an integer of 12 to 29, and c is an integer of 2 to 7. For example, in Formula 6, structure a may account for 65 to 75% by weight, structure b may account for 20 to 25% by weight, and structure c may account for 5 to 10% by weight, based on the total weight of poly(ethylene-co-methyl acrylate-co-glycidyl methacrylate).

In addition, in Formula 7, d is an integer of 129 to 300, e is an integer of 8 to 25, and f is an integer of 1 to 3. For example, in Formula 7, structure d may account for 72 to 84% by weight, structure e may account for 15 to 25% by weight, and structure f may account for 1 to 3% by weight, based on the total weight of poly(ethylene-co-ethyl acrylate-co-maleic anhydride).

Examples of the reactive compatibilizer commercially available include Rotarder AX8840, Rotarder AX8900, and Rotarder AX4720.

According to the present invention, the amount (amount added in the reaction) of the reactive compatibilizer used is not particularly limited, but it may be 0.1 to 10% by weight, 0.3 to 9% by weight, 0.5 to 8% by weight, 0.8 to 7% by weight, 1 to 5% by weight, 1.5 to 4.5% by weight, or 2 to 4% by weight, based on the total weight of the thermoplastic polyester elastomer resin (the total weight of the first and second polyester elastomer resins). As the amount of the reactive compatibilizer used is within the above range, the thermoplastic polyester elastomer resin can have a desired level of melt viscosity, thereby enhancing the moldability (processability) of the thermoplastic polyester elastomer resin.

As the reactive compatibilizer is employed, the thermoplastic polyester elastomer resin according to the present invention may comprise a repeat unit (a) represented by the above Formula 1, a repeat unit (b) represented by the above Formula 2, a repeat unit (c) represented by the above Formula 3, and a bonding structure derived from the reactive compatibilizer (e.g., a structure represented by the above Formula 6 or Formula 7). Specifically, the thermoplastic polyester elastomer resin may be a copolymerized thermoplastic polyester elastomer resin in which a structure represented by the above Formula 4 and a structure represented by the above Formula 5 are bonded by a structure represented by the above Formula 6 or a structure represented by the above Formula 7.

The thermoplastic polyester elastomer resin according to the present invention selectively comprises the reactive compatibilizer, together with the first polyester elastomer resin and the second polyester elastomer resin in which the high molecular weight glycol components (PO3G and EO-PPG) are each employed for forming a soft block as described above, resulting in enhanced properties.

Specifically, the thermoplastic polyester elastomer resin according to the present invention may have a tensile strength of 150 kgf/cm$^2$ or more, 170 kgf/cm$^2$ or more, 190 kgf/cm$^2$ or more, 195 kgf/cm$^2$ or more, 200 kgf/cm$^2$ or more, 205 kgf/cm$^2$ or more, 220 kgf/cm$^2$ or more, 230 kgf/cm$^2$ or more, 240 kgf/cm$^2$ or more, or 250 kgf/cm$^2$ or more, when measured in accordance with ASTM D638. More specifically, the tensile strength may be 190 to 350 kgf/cm$^2$, 195 to 335 kgf/cm$^2$, 200 to 325 kgf/cm$^2$, or 210 to 320 kgf/cm$^2$.

The thermoplastic polyester elastomer resin according to the present invention may have an intrinsic viscosity (IV) of 0.9 to 2.4 dl/g, 1.0 to 2.4 dl/g, 1.05 to 2.3 dl/g, 1.1 to 2.2 dl/g, 1.2 to 2 dl/g, 1.3 to 1.9 dl/g, 1.35 to 1.88 dl/g, or 1.4 to 1.85 dl/g.

The thermoplastic polyester elastomer resin according to the present invention may have a Shore D hardness of 20 to 60, 25 to 55, 28 to 53, 28 to 50, 30 to 48, or 30 to 45.

The thermoplastic polyester elastomer resin according to the present invention has a compression set (compression-elastic recovery) of 30 to 60%, 31 to 58%, 33 to 57%, 35 to 56%, 37 to 55%, 39 to 54%, 40 to 53%, or 42 to 52%.

The thermoplastic polyester elastomer resin according to the present invention has a resilience (elasticity) of 50 to 80%, 51 to 79%, 52 to 78%, 54 to 76%, 55 to 75%, 56 to 74%, 58 to 73%, or 60 to 70%.

The thermoplastic polyester elastomer resin according to the present invention satisfies the following Relationship 5 and/or Relationship 6, whereby it may have excellent mechanical strength, elasticity, and compression-elastic

recovery.

[Relationship 5]

$$H/R \leq 0.97$$

[Relationship 6]

$$0.6 \leq H/CS$$

In Relationships 5 and 6, H is the Shore D hardness of the thermoplastic polyester elastomer resin as measured in accordance with ASTM D2240, R is the resilience of the thermoplastic polyester elastomer resin as measured in accordance with ASTM D2632, and CS is the compression set of the thermoplastic polyester elastomer resin as measured in accordance with ISO 816 Method B.

Specifically, the ratio of H/R may be 0.75 or less, 0.73 or less, 0.70 or less, or 0.68 or less, and 0.3 or more, 0.32 or more, 0.34 or more, 0.38 or more, 0.4 or more, 0.42 or more, or 0.48 or more (e.g., 3 to 0.75, 0.32 to 0.75, 0.34 to 0.73, 0.38 to 0.73, 0.4 to 0.70, 0.42 to 0.70, or 0.48 to 0.68).

In addition, the ratio of H/CS may be 0.7 or more, 0.8 or more, 0.81 or more, or 0.82 or more, and 0.95 or less, 0.93 or less, 0.92 or less, 0.91 or less, 0.9 or less, 0.89 or less, or 0.88 or less (e.g., 0.7 to 0.95, 0.8 to 0.93, 0.8 to 0.92, 0.81 to 0.91, 0.81 to 0.9, 0.82 to 0.89, or 0.82 to 0.88).

The thermoplastic polyester elastomer resin according to the present invention has basic physical properties (e.g., thermal resistance, impact resistance, moldability, and the like) and is excellent in mechanical strength, elasticity, and compression-elastic recovery. Thus, it can be used in the production of various products. Specifically, the thermoplastic polyester elastomer resin may be useful in the production of fibers, films, foams (foam-type molded articles), and shoe parts (e.g., shoe midsoles, shoe outsoles, and cushioning materials for shoe insoles).

**Process for preparing a thermoplastic polyester elastomer resin**

The thermoplastic polyester elastomer resin according to the present invention may be prepared by a procedure of obtaining a first thermoplastic polyester elastomer resin and a second thermoplastic polyester elastomer resin, respectively, through an esterification reaction or a transesterification reaction of respective reaction raw materials, followed by a polycondensation reaction, and melt-kneading these resins. Specifically, the process for preparing a thermoplastic polyester elastomer resin according to the present invention comprises (1-1) reacting a first glycol component, a first dicarboxylic acid component, and a first high molecular weight glycol component to obtain a first polyester elastomer resin; (1-2) reacting a second glycol component, a second dicarboxylic acid component, and a second high molecular weight glycol component to obtain a second polyester elastomer resin; and (1-3) melt-kneading the first polyester elastomer resin and the second polyester elastomer resin, which will be described in detail as follows.

<u>Step (1-1): Preparation of a first polyester elastomer resin</u>

According to the present invention, step (1-1) is a step of charging a first glycol component, a first dicarboxylic acid component, and a first high molecular weight glycol component as reaction raw materials to a reactor (an esterification reactor or a transesterification reactor) and carrying out an esterification reaction or a transesterification reaction to obtain a reactant; and carrying out a polycondensation reaction thereof to obtain a first polyester elastomer resin. Here, preferably, the first glycol component comprises 1,4-butanediol, and the first high molecular weight glycol component comprises polytrimethylene ether glycol (PO3G). The description of these components is the same as above and is therefore omitted. In addition, the description of the first dicarboxylic acid component is the same as above and is therefore omitted.

For the esterification reactor or transesterification reaction, the first glycol component, the first dicarboxylic acid component, and the first high molecular weight glycol component are charged to the reactor at once. Alternatively, the first glycol component and the first dicarboxylic acid component are first charged, and the temperature is raised. When the temperature of the reactor reaches a certain level, the first high molecular weight glycol component may be charged thereto. For example, the charging of the first high molecular weight glycol component may be carried out under a nitrogen atmosphere at a temperature of 180 to 280°C while water or methanol as a by-product is removed.

The esterification reaction or transesterification reaction may be carried out in the presence of a catalyst. The catalyst is not particularly limited as long as it is a commonly known catalyst. Specifically, at least one selected from the group consisting of a titanium-based catalyst, a germanium-based catalyst, an antimony-based catalyst, an aluminum-based catalyst, and a tin-based catalyst may be used.

For example, the titanium-based catalyst may comprise at least one selected from the group consisting of tetraethyl titanate, acetyltripropyl titanate, tetrapropyl titanate, tetrabutyl titanate, 2-ethylhexyl titanate, octylene glycol titanate, triethanolamine titanate, acetylacetonate titanate, ethylacetoacetic ester titanate, isostearyl titanate, and titanium dioxide. The germanium-based catalyst may comprise at least one selected from the group consisting of germanium dioxide, germanium tetrachloride, germanium ethylene glycol oxide, and germanium acetate.

The amount of catalyst used (amount added in the reaction) may be appropriately adjusted depending on the reaction conditions and the type of catalyst. For example, the catalyst may be charged such that the weight of metal components (e.g., Ti, Ge, Sb, Al, Sn, and the like) contained in the catalyst is 0.0001 to 0.005 part by weight relative to the total weight of the first glycol component, first dicarboxylic acid component, and first high molecular weight glycol component charged to the reactor.

Meanwhile, one or more additives selected from the group consisting of a crystallizing agent, an antioxidant, and a polymerization reaction branching agent may be further added in the esterification reaction or transesterification reaction.

As the crystallizing agent, a crystal nucleating agent, an ultraviolet absorber, a polyolefin resin, a polyamide resin, or the like may be used.

As the antioxidant, at least one selected from the group consisting of hindered phenol-based compounds, phosphite-based compounds, and thioether-based compounds may be used.

As the polymerization reaction branching agent, a polyol having 3 to 6 hydroxyl groups; a polycarboxylic acid having 3 to 4 carboxyl groups, or an anhydride thereof; or a hydroxy acid having a total of 3 to 6 hydroxyl groups and carboxyl groups may be used. Specifically, the polyol may comprise at least one selected from the group consisting of glycerol, sorbitol, pentaerythritol, 1,1,4,4-tetrakis(hydroxymethyl)cyclohexane, trimethylol propane, and 1,2,6-hexane triol. In addition, the polycarboxylic acid may comprise hemimellitic acid, trimellitic acid, trimespyromellitic acid, 1,1,2,2-ethanetetracarboxylic acid, 1,1,2-ethanetricarboxylic acid, 1,3,5-pentanetricarboxylic acid, and 1,2,3,4-cyclopentanetetracarboxylic acid. For example, as the polymerization reaction branching agent, trimellitic acid, trimellitic anhydride, trimethylol propane, or a combination thereof may be used to control the melt index (MI) of the thermoplastic polyester elastomer resin to a desired level.

The amount of the polymerization reaction branching agent used (amount added in the reaction) is not particularly limited, but its concentration may be 0.00015 to 0.005 equivalent per 100 g of the first polyester elastomer resin.

The esterification reaction or transesterification reaction is usually carried out without the addition of a solvent, but an inert solvent such as water and a diol may be added to expedite the removal of volatile components.

The conditions of the esterification reaction or transesterification reaction may be appropriately adjusted depending on the reaction environment and the molecular weight of the desired reactant. Specifically, the pressure for the esterification reaction or transesterification reaction may be 0.01 $kg/cm^2$ or more, 0.05 $kg/cm^2$ or more, or 0.1 $kg/cm^2$ or more, and may be 1.5 $kg/cm^2$ or less, 1 $kg/cm^2$ or less, 0.5 $kg/cm^2$ or less, or 0.3 $kg/cm^2$ or less. The temperature for the esterification reaction or transesterification reaction may be 140°C or higher, 160°C or higher, 180°C or higher, or 200°C or higher, and may be 300°C or lower, 280°C or lower, 270°C or lower, 250°C or lower, or 220°C or lower. The esterification reaction or transesterification reaction may be carried out under a nitrogen atmosphere. For example, the esterification reaction or transesterification reaction may be carried out under a nitrogen atmosphere and the conditions of 0.05 to 1.5 $kg/cm^2$ and 180 to 280°C.

The esterification reaction or transesterification reaction may be carried out in a batch or continuous manner.

The termination point of the esterification reaction or transesterification reaction may be determined by considering the theoretical amount of water or methanol, which is a by-product formed from the first dicarboxylic acid component, or when the by-product is no longer discharged.

The reactant obtained through such an esterification reaction or a transesterification reaction may be subjected to a polycondensation reaction. In such an event, the conditions under which the polycondensation reaction is carried out may not be particularly limited.

Specifically, the polycondensation reaction may be carried out under a vacuum atmosphere. In addition, the pressure for the polycondensation reaction may be 0.01 to 600 mmHg, 0.05 to 200 mmHg, 0.1 to 100 mmHg, 0.5 to 50 mmHg, or 1 to 10 mmHg. In addition, the temperature for the polycondensation reaction may be 150 to 300°C, 200 to 290°C, 220 to 280°C, or 230 to 260°C. For example, the polycondensation reaction may be carried out under a vacuum atmosphere at a reduced pressure of 0.1 to 10 mmHg and 200 to 260°C for 1 to 24 hours. As the polycondensation reaction is carried out under the above conditions, a first polyester elastomer resin having the desired molecular weight and intrinsic viscosity (IV) can be produced while by-products are sufficiently removed.

A first polyester elastomer resin comprising the repeat units ((a) and (b)) represented by the above Formulae 1 and 2 can be prepared in a high yield through the above procedures.

Step (1-2): Preparation of a second polyester elastomer resin

According to the present invention, step (1-2) is a step of charging a second glycol component, a second dicarboxylic acid component, and a second high molecular weight glycol component as reaction raw materials to a reactor (an esterification reactor or a transesterification reactor) and carrying out an esterification reaction or a transesterification reaction to obtain a reactant; and carrying out a polycondensation reaction thereof to obtain a second polyester elastomer resin. Here, the second glycol component comprises 1,4-butanediol, and the second high molecular weight glycol component comprises ethylene oxide-adducted polypropylene glycol (EO-PPG). The description of these components is the same as above and is therefore omitted. In addition, the description of the second dicarboxylic acid component is the same as above and is therefore omitted.
For the esterification reactor or transesterification reaction, the second glycol component, the second dicarboxylic acid component, and the second high molecular weight glycol component are charged to the reactor at once. Alternatively, the second glycol component and the second dicarboxylic acid component are first charged, and the temperature is raised. When the temperature of the reactor reaches a certain level, the second high molecular weight glycol component may be charged thereto. For example, the charging of the second high molecular weight glycol component may be carried out under a nitrogen atmosphere at a temperature of 180 to 280°C while water or methanol as a by-product is removed.
The description of the esterification reaction or transesterification reaction is the same as the description of the esterification reaction or transesterification reaction for preparing the first polyester elastomer resin; thus, it is omitted.
The reactant obtained through the esterification reaction or a transesterification reaction may be subjected to a polycondensation reaction. In such an event, the conditions under which the polycondensation reaction is carried out may not be particularly limited. Specifically, the description of the polycondensation reaction is the same as the description of the polycondensation reaction for preparing the first polyester elastomer resin; thus, it is omitted.
A second polyester elastomer resin comprising the repeat units ((a) and (c)) represented by the above Formulae 1 and 3 can be prepared in a high yield through the above procedures.

Step (1-3): Melt-kneading

According to the present invention, step (1-3) is a step of melt-kneading the first polyester elastomer resin obtained in step (1-1) and the second polyester elastomer resin obtained in step (1-2).
The melt-kneading may be carried out under heating and/or pressurizing conditions using a melt-kneading reactor such as a single-screw extruder, a twin-screw extruder, a mixing roll, a Banbury mixer, a batch kneader, a molding machine, or the like.
For the melt-kneading, the first polyester elastomer resin and the second polyester elastomer resin may be subjected to a preliminary mixing procedure. Specifically, the preliminary mixing procedure may be carried out by charging the first polyester elastomer resin and the second polyester elastomer resin to various mixers, such as a V-type blender, a ribbon blender, a Henschel mixer, a rocking mixer, a tubular mixer, a planetary mixer, a Banbury mixer, a mill blender, a mixing roll, and a tumbler, and performing preliminary mixing in a solid form. The mixing time in the solid form may vary depending on the type of mixer, but the mixing time may be adjusted such that the standard deviation of the target mixing ratio is within 1%, and at most 2%, when sampling is performed at five locations randomly after mixing.
In the preliminary mixing procedure, commonly known additives (e.g., colorants, fillers, sunscreens, thermal stabilizers, and the like) may be added as needed. Here, the first polyester elastomer resin and the second polyester elastomer resin may be directly charged to the melt-kneading reactor without being subjected to the preliminary mixing procedure. In addition, a thermoplastic polyester elastomer resin may be prepared by preliminary mixing some of the raw material components and then melt-kneading them to obtain a reactant, which is used as a masterbatch, mixing the remaining raw material components with the masterbatch, and then melt-kneading them again.
The melt-kneading may be carried out, preferably, in a single-screw extruder or a twin-screw extruder. The temperature at which melt-kneading is carried out through the extruder(s) (e.g., the barrel temperature of the extruder) is not particularly limited and may be determined in light of miscibility, ease of extrusion, extrusion reaction efficiency, and the like. Specifically, the melt-kneading may be carried out at a temperature higher than the melting temperature ($T_m$) of the desired thermoplastic polyester elastomer resin by 20 to 30°C. For example, the temperature at which melt-kneading is carried out may be 170 to 230°C, 180 to 225°C, 190 to 220°C, 195 to 215°C, or 200 to 210°C. Meanwhile, the extrusion speed (screw rotation speed) of the extruder(s) is not particularly limited. Specifically, it may be 150 to 230 rpm, 160 to 225 rpm, 170 to 220 rpm, 180 to 210 rpm, 190 to 205 rpm, or 195 to 200 rpm. As melt-kneading is carried out under the above conditions, sufficient melt-kneading and reaction extrusion are possible with an appropriate throughput per unit time. If the above conditions are not satisfied, the thermoplastic polyester elastomer resin may be thermally decomposed, or its melting characteristics may be poor, resulting in insufficient melt-kneading.
The mixing ratio of the first polyester elastomer resin and the second polyester elastomer resin in the melt-kneading is not particularly limited, but it may be a weight ratio of 40:60 to 99:1, 45:55 to 99:1, 50:50 to 98:2, 55:45 to 98:2, 60:40 to 90:10, 65:35 to 90:10, 70:30 to 85:15, or 75:25 to 85:15, in light of the desired physical properties of the thermoplastic polyester elastomer resin.

Meanwhile, the melt-kneading in step (1-3) may be carried out in the presence of a reactive compatibilizer. Specifically, step (1-3) may be carried out by preliminarily mixing the first polyester elastomer resin and the second polyester elastomer resin with the reactive compatibilizer, followed by melt-kneading thereof, or by charging the first polyester elastomer resin, the second polyester elastomer resin, and the reactive compatibilizer to the melt-kneading reactor, without the preliminary mixing, followed by melt-kneading thereof.

As the melt-kneading is carried out in the presence of the reactive compatibilizer, the dispersibility of the first polyester elastomer resin and the second polyester elastomer resin is maximized, and chemical crosslinking is achieved. As a result, it is possible to prepare a copolymerized thermoplastic polyester elastomer resin having excellent mechanical strength, elasticity, and compression-elastic recovery, while securing basic physical properties.

In particular, as the reactive compatibilizer is employed (added), dispersion and combination are achieved between the second polyester elastomer resin, which has a repeat unit (repeat (c) of Formula 3) derived from ethylene oxide-adducted polypropylene glycol (EO-PPG) having an energy repulsive elastic effect, and the first polyester elastomer resin, which has a repeat unit (repeat unit (b) of Formula 2) derived from polytrimethylene ether glycol (PO3G) that determines mechanical strength, in a state in which micro-phase separation does not take place. Thus, a thermoplastic polyester elastomer resin with very excellent elasticity and compression-elastic recovery can be prepared.

Specifically, as melt-kneading is carried out with the reactive compatibilizer employed (added), the hydroxyl group (-OH) or carboxyl group (-COOH) present in the first polyester elastomer resin and the second polyester elastomer resin, respectively, is reacted with the glycidyl group or maleic anhydride structure in the reactive compatibilizer to form an ether bond or an ester bond.

The description of the reactive compatibilizer is the same as above and is therefore omitted.

## Composition and article

The composition according to the present invention comprises the thermoplastic polyester elastomer resin described above. Specifically, since the composition according to the present invention comprises a thermoplastic polyester elastomer resin with excellent mechanical strength, elasticity, and compression-elastic recovery, it can be used for the production of various products.

The composition according to the present invention may further comprise commonly known solvents and additives as needed.

Meanwhile, the article according to the present invention comprises the thermoplastic polyester elastomer resin described above. The article according to the present invention is not particularly limited, but it may be a fiber, a foam (a molded article in the form of foam), or a shoe part.

The fiber may be a single-component fiber and/or a multi-component fiber (e.g., a bi-component fiber). The fiber may be made into woven fabrics, knitted fabrics, or nonwoven fabrics.

The foam (molded article in the form of foam) may be manufactured through a process of physically or chemically foaming a composition comprising the thermoplastic polyester elastomer resin described above in a mold or autoclave. The density of the foam is not particularly limited, but it may be 0.15 to 0.45 g/cm$^3$. This foam has high elasticity and energy return characteristics by virtue of the thermoplastic polyester elastomer resin described above; thus, it can be applied to straps, bogie gear, high elasticity shock absorbing parts, and the like.

The shoe part is obtained by putting a composition comprising the thermoplastic polyester elastomer resin described above into a mold and molding it. Specifically, it may be a shoe midsole, a shoe outsole, or a cushioning material for a shoe insole.

## Mode for the Invention

Hereinafter, the present invention will be described in more detail with reference to embodiments. However, these examples are provided only for illustration purposes, and the present invention is not limited thereto.

### [Polymerization Example 1]

Step (1-1): Preparation of a reactant through a transesterification reaction

A transesterification reactor having a volume of 1.2 m$^3$ and equipped with a column and a condenser that can be cooled by water was charged with 18.1 kg of 1,4-butanediol (1,4-BD) as a glycol component; 66.2 kg of polytrimethylene ether glycol (PO3G) as a high molecular weight glycol component; 32.3 kg of dimethyl terephthalate (DMT) as a

dicarboxylic acid component; 0.11 kg of trimellitic anhydride (TMA) as a polymerization reaction branching agent; 0.25 kg of tetrabutyl titanate (TBT) as a reaction catalyst; 0.15 kg of 11098 and 0.15 kg of I1019 as primary antioxidants; and 0.1 kg of I168 as a secondary antioxidant. Subsequently, the reactor was evacuated, and nitrogen was flowed to backcharge the pressure in the reactor to 1 kg/cm$^2$ to create an inert atmosphere. Thereafter, the temperature was raised while the charged raw materials were stirred under a nitrogen atmosphere. When the temperature in the reactor reached about 200°C, a transesterification reaction was carried out for 3 hours while the temperature was maintained at 200°C. In such an event, methanol as a by-product was discharged through the column and condenser during the transesterification reaction, and the transesterification reaction was continued until the discharge of methanol stopped. Thereafter, upon completion of the transesterification reaction, nitrogen in the pressurized reactor was discharged to the outside to lower the pressure in the reactor to normal pressure, and the reactant (resulting material) in the reactor was then transferred to a polycondensation reactor having a volume of 0.75 m$^3$ capable of a reaction under vacuum.

Step (1-2): Preparation of a polyester elastomer resin through a polycondensation reaction

The pressure of the polycondensation reactor was reduced from normal pressure to 5 Torr (absolute pressure: 5 mmHg) over 30 minutes. At the same time, the temperature of the polycondensation reactor was raised to 245°C over 1 hour, and a polycondensation reaction was then carried out while the pressure of the polycondensation reactor was maintained at 1 Torr (absolute pressure: 1 mmHg) or less. In such an event, at the beginning of the polycondensation reaction, the stirring speed might be set high. As the polycondensation reaction proceeded, the glycol component produced as a by-product was discharged through the column and condenser. When the stirring power was weakened due to the increase in the viscosity of the reactant or the temperature of the reactant was elevated above the set temperature, the stirring speed was appropriately adjusted. Thereafter, the polycondensation reaction was carried out until the intrinsic viscosity (IV) of the reactant (melt) in the reactor reached 1.85 dl/g. When the intrinsic viscosity (IV) of the reactant reached the desired level, the reactant was discharged to the outside of the reactor and formed into strands. Subsequently, they were solidified with a cooling liquid and then pelletized such that the average weight of 100 pellets was about 2.5 to 4.0 g, thereby obtaining a polyester elastomer resin.

**[Polymerization Examples 2 and 3]**

A polyester elastomer resin was obtained through the same procedure as in Polymerization Example 1, except that the amount of polytrimethylene ether glycol (PO3G) fed as a high molecular weight glycol component in the transesterification reaction was changed as shown in Table 1 below.

**[Polymerization Examples 4 and 5]**

A polyester elastomer resin was obtained through the same procedure as in Polymerization Example 1, except that ethylene oxide-adducted polypropylene glycol (EO-PPG), instead of polytrimethylene ether glycol (PO3G), was fed as a high molecular weight glycol component in the transesterification reaction, and trimethylolpropane (TMP), instead of trimellitic anhydride (TMA), was fed as a polymerization reaction branching agent, while their amounts used were changed as shown in Table 1 below.

[Table 1]

| Raw material | Polym. Ex. 1 | Polym. Ex. 2 | Polym. Ex. 3 | Polym. Ex. 4 | Polym. Ex. 5 |
|---|---|---|---|---|---|
| DMT | 32.3 | 40.0 | 60.9 | 35.8 | 53.1 |
| 1,4-BD | 18.1 | 24.1 | 37.9 | 21.3 | 34.5 |
| PO3G | 66.2 | 57.0 | 33.8 | - | - |
| PO3G Mn | 2,000 | 2,000 | 1,000 | - | - |
| EO-PPG | - | - | - | 61.7 | 41.3 |
| EO-PPG Mn | - | - | - | 2,400 | 2,400 |
| TMA | 0.11 | 0.12 | 0.11 | - | - |
| TMP | - | - | - | 0.15 | 0.14 |
| I1098 | 0.15 | 0.15 | 0.15 | 0.15 | 0.15 |
| I1019 | 0.15 | 0.15 | 0.15 | 0.15 | 0.15 |

(continued)

| Raw material | Polym. Ex. 1 | Polym. Ex. 2 | Polym. Ex. 3 | Polym. Ex. 4 | Polym. Ex. 5 |
|---|---|---|---|---|---|
| I168 | 0.10 | 0.10 | 0.10 | 0.10 | 0.10 |
| TBT | 0.25 | 0.25 | 0.25 | 0.25 | 0.25 |

DMT: dimethyl terephthalate
1,4-BD: 1,4-butanediol
PO3G: polytrimethylene ether glycol
EO-PPG: ethylene oxide-adducted polypropylene glycol
TMA: trimellitic anhydride
TMP: trimethylol propane
TBT: tetrabutyl titanate

**[Example 1]**

2.1 kg of the resin of Polymerization Example 1 as the first polyester elastomer resin; 0.9 kg of the resin of Polymerization Example 4 as the second polyester elastomer resin; and 60 g of Rotader AX8900 as the reactive compatibilizer were mixed in a solid state (mixing ratio of the first polyester elastomer resin and the second polyester elastomer resin was a weight ratio of 70:30), which was then fed to a twin-screw extruder (Bautech, KZW20TW-30) set to a barrel temperature of 200°C (with the feeder section of 150°C). Subsequently, it was melt-kneaded at a screw rotation speed of 200 rpm and then pelletized to obtain a thermoplastic polyester elastomer resin.

**[Example 2]**

A thermoplastic polyester elastomer resin was obtained through the same procedure as in Example 1, except that 2.4 kg of the resin of Polymerization Example 2 as the first polyester elastomer resin; 0.6 kg of the resin of Polymerization Example 4 as the second polyester elastomer resin; and 60 g of Rotader AX8840 as the reactive compatibilizer were mixed in a solid state (mixing ratio of the first polyester elastomer resin and the second polyester elastomer resin was a weight ratio of 80:20).

**[Example 3]**

A thermoplastic polyester elastomer resin was obtained through the same procedure as in Example 1, except that 2.4 kg of the resin of Polymerization Example 2 as the first polyester elastomer resin; 0.30 kg of the resin of Polymerization Example 3 and 0.30 kg of the resin of Polymerization Example 4 as the second polyester elastomer resins; and 60 g of Rotader AX4720 as the reactive compatibilizer were mixed in a solid state (mixing ratio of the first polyester elastomer resin and the second polyester elastomer resins was a weight ratio of 80:20).

**[Example 4]**

A thermoplastic polyester elastomer resin was obtained through the same procedure as in Example 1, except that 1.8 kg of the resin of Polymerization Example 2 as the first polyester elastomer resin; 1.2 kg of the resin of Polymerization Example 5 as the second polyester elastomer resin; and 60 g of Rotader AX8900 as the reactive compatibilizer were mixed in a solid state (mixing ratio of the first polyester elastomer resin and the second polyester elastomer resin was a weight ratio of 60:40).

**[Example 5]**

A thermoplastic polyester elastomer resin was obtained through the same procedure as in Example 1, except that 2.925 kg of the resin of Polymerization Example 2 as the first polyester elastomer resin; 0.075 kg of the resin of Polymerization Example 4 as the second polyester elastomer resin; and 60 g of Rotader AX8900 as the reactive compatibilizer were mixed in a solid state (mixing ratio of the first polyester elastomer resin and the second polyester elastomer resin was a weight ratio of 97.5:2.5) and that the barrel temperature was set to 220°C (with the feeder section of 160°C).

**[Example 6]**

A thermoplastic polyester elastomer resin was obtained through the same procedure as in Example 1, except that 1.5 kg of the resin of Polymerization Example 3 as the first polyester elastomer resin; 1.5 kg of the resin of Polymerization Example 5 as the second polyester elastomer resin; and 60 g of Rotader AX4720 as the reactive compatibilizer were mixed in a solid state (mixing ratio of the first polyester elastomer resin and the second polyester elastomer resin was a weight ratio of 50:50) and that the barrel temperature was set to 220°C (with the feeder section of 160°C).

**[Example 7]**

0.6 kg of the resin of Polymerization Example 3 as the first polyester elastomer resin and 2.4 kg of the resin of Polymerization Example 4 as the second polyester elastomer resin were mixed in a solid state (mixing ratio of the first polyester elastomer resin and the second polyester elastomer resin was a weight ratio of 20:80), which was then fed to a twin-screw extruder (Bautech, KZW20TW-30) set to a barrel temperature of 200°C (with the feeder section of 150°C). Subsequently, it was melt-kneaded at a screw rotation speed of 200 rpm and then pelletized to obtain a thermoplastic polyester elastomer resin.

**[Example 8]**

2.1 kg of the resin of Polymerization Example 1 as the first polyester elastomer resin and 0.9 kg of the resin of Polymerization Example 4 as the second polyester elastomer resin were mixed in a solid state (mixing ratio of the first polyester elastomer resin and the second polyester elastomer resin was a weight ratio of 70:30), which was then fed to a twin-screw extruder (Bautech, KZW20TW-30) set to a barrel temperature of 200°C (with the feeder section of 150°C). Subsequently, it was melt-kneaded at a screw rotation speed of 200 rpm and then pelletized to obtain a thermoplastic polyester elastomer resin.

**[Comparative Example 1]**

The resin of Polymerization Example 3 alone was used as a thermoplastic polyester elastomer resin.

**[Comparative Example 2]**

The resin of Polymerization Example 4 alone was used as a thermoplastic polyester elastomer resin.

The composition and physical properties of the thermoplastic polyester elastomer resins obtained in Examples 1 to 8 and Comparative Examples 1 and 2 were each evaluated as follows. The results are shown in Tables 2 and 3 below.

**[Test Example 1] Content of a hard segment (Formula 1) and a soft segment (Formulae 2 and 3)**

Each thermoplastic polyester elastomer resin was dissolved in a $CDCl_3$ solvent at a concentration of 3 mg/ml, whose $^1$H-NMR spectrum was obtained at 25°C using nuclear magnetic resonance equipment (JEOL, 600 MHz FT-NMR). The spectrum was analyzed to calculate the contents (part by weight) of BD, PO3G, and EO-PPG based on the total number of moles of residues derived from the entire glycols (BD, PO3G, EO-PPG, and the like), which was used to confirm the content of the hard segment and soft segment contained in the total weight of the thermoplastic polyester elastomer resin.

**[Test Example 2] Shore D hardness (H)**

The hardness of each thermoplastic polyester elastomer resin was measured in accordance with ASTM D2240 (Durometer Type D). Specifically, thermoplastic polyester elastomer resin pellets were injection molded using an injection molding machine (ENGEL, Victory 80) to produce a test specimen of 100 mm in width, 100 mm in length, and 2 mm in thickness, three of which were stacked to obtain a test specimen with a thickness of 6 mm. Then, the hardness was measured.

**[Test Example 3] Intrinsic viscosity (IV)**

Each thermoplastic polyester elastomer resin was dissolved in orthochlorophenol (OCP) at a concentration of 0.12% at 150°C to obtain a solution, and an Ubbelohde viscometer was used in a constant temperature bath at 35°C to

measure the intrinsic viscosity of the thermoplastic polyester elastomer resin. Specifically, the temperature of the viscosity tube was maintained at 35°C, and the time (efflux time) required for the solvent to pass between specific internal sections of the viscosity tube and the time required for the solution to pass to obtain specific viscosity, which was used to calculate intrinsic viscosity.

**[Test Example 4] Melt index (MI)**

In accordance with ASTM D1238, each thermoplastic polyester elastomer resin was kept at 220°C under a load of 2.16 kg for 4 minutes, and the amount of discharged material per hour was then averaged three times to calculate the melt index.

**[Test Example 5] Melting point (Tm)**

Each thermoplastic polyester elastomer resin was dried under a reduced pressure at 50°C for 15 hours, melted, and quenched, which was then heated at 10°C/minute in a differential scanning calorimeter (DSC, TA Instruments) for scanning. Thereafter, the highest point of the endothermic peak due to the melting of the resin was taken as the melting point (Tm).

**[Test Example 6] Tensile strength**

The tensile strength of each thermoplastic polyester elastomer resin was measured in accordance with ASTM D638. Specifically, thermoplastic polyester elastomer resin pellets were injection molded using an injection molding machine (ENGEL, Victory 80) to produce a test specimen of 120 mm in width, 120 mm in length, and 2 mm in thickness, which was punched to obtain a tensile test specimen of ASTM Type I (dumbbell-shaped bar). Next, the tensile strength of the tensile test specimen was measured using a tensile tester (Zwick Roell, Z010) at a speed of 50 mm/minute.

**[Test Example 7] Compression set (CS)**

The compression set of each thermoplastic polyester elastomer resin was measured in accordance with ISO 816 Method B. Specifically, thermoplastic polyester elastomer resin pellets were injection molded using a compression molding machine (WithLab, WL1700) to produce a test specimen of 29 mm in diameter and 12.5 mm in thickness, which was compressed by pressing at 70°C for 22 hours at a compression ratio of 25% thickness. Thereafter, the remaining strain was obtained when the compressing force was removed, which was used to calculate the compression set.

**[Test Example 8] Resilience (R)**

The resilience of each thermoplastic polyester elastomer resin was measured in accordance with ASTM D2632. Specifically, thermoplastic polyester elastomer resin pellets were injection molded using a compression molding machine (WithLab, WL1700) to produce a test specimen of 29 mm in diameter and 12.5 mm in thickness. Next, a weight of 28 g was dropped on the test specimen, and the rebound height was obtained, which was used to calculate the resilience.

[Table 2]

| | Ex. 1 | Ex. 2 | Ex. 3 | Ex. 4 | Ex. 5 | Ex. 6 | Ex. 7 | Ex. 8 |
|---|---|---|---|---|---|---|---|---|
| Part by weight (y) of repeat unit (b) in Formula 2 | 49.4 | 48.6 | 48.6 | 36.4 | 59.2 | 30.4 | 12.2 | 49.4 |
| Part by weight (z) of repeat unit (c) in Formula 3 | 19.5 | 13.0 | 11.0 | 17.4 | 1.6 | 21.8 | 52.0 | 19.5 |
| Part by weight (x) of repeat unit (a) in Formula 1 | 31.1 | 38.4 | 40.4 | 46.2 | 39.2 | 47.8 | 35.8 | 31.1 |
| y/z (weight ratio of soft segment) | 2.53 | 3.74 | 4.4 | 2.09 | 37 | 1.4 | 0.23 | 2.53 |
| (y+z)/x (weight ratio of soft segment to hard segment) | 2.22 | 1.6 | 1.48 | 1.16 | 1.55 | 1.09 | 1.80 | 2.22 |
| H (Shore D) | 30 | 35 | 39 | 44 | 40 | 48 | 50 | 30 |
| IV (dl/g) | 1.55 | 1.52 | 1.68 | 1.39 | 1.55 | 1.11 | 0.96 | 1.32 |
| MI (g/10 min., 220°C) | 27 | 19 | 23 | 19 | 21 | 21 | 40 | 37 |
| Tm (°C) | 200 | 197 | 203 | 222 | 196 | 218 | 210 | 214 |
| Tensile strength (kgf/$cm^2$) | 205 | 213 | 241 | 288 | 239 | 331 | 152 | 171 |

(continued)

| | Ex. 1 | Ex. 2 | Ex. 3 | Ex. 4 | Ex. 5 | Ex. 6 | Ex. 7 | Ex. 8 |
|---|---|---|---|---|---|---|---|---|
| Compression set (CS, %) | 36 | 43 | 51 | 54 | 50 | 55 | 56 | 43 |
| Resilience (R, %) | 69 | 62 | 63 | 68 | 55 | 64 | 52 | 52 |
| H/CS | 0.83 | 0.81 | 0.76 | 0.81 | 0.80 | 0.87 | 0.90 | 0.70 |
| H/R | 0.43 | 0.56 | 0.62 | 0.65 | 0.73 | 0.75 | 0.96 | 0.58 |

[Table 3]

| | C. Ex. 1 | C. Ex. 2 |
|---|---|---|
| Part by weight (y) of repeat unit (b) in Formula 2 | 38.2 | - |
| Part by weight (z) of repeat unit (c) in Formula 3 | - | 65.0 |
| Part by weight (x) of repeat unit (a) in Formula 1 | 61.8 | 35.0 |
| y/z (weight ratio of soft segments) | - | - |
| (y+z)/x (weight ratio of soft segments to hard segment) | 0.62 | 1.86 |
| H (Shore D) | 55 | 28 |
| IV (dl/g) | 1.31 | 1.38 |
| MI (g/10 min., 220°C) | 13 | 24 |
| Tm (°C) | 203 | 194 |
| Tensile strength (kgf/cm$^2$) | 380 | 120 |
| Compression set (CS, %) | 64 | 53 |
| Resilience (R, %) | 50 | 55 |
| H/CS | 0.86 | 0.53 |
| H/R | 1.10 | 0.51 |

Referring to Tables 2 and 3 above, the thermoplastic polyester elastomer resins of Examples 1 to 8 according to the present invention, each of which comprised a soft segment comprising repeat units (Formulae 2 and 3) derived from PO3G and EO-PPG, respectively, and a hard segment (Formula 1), were excellent in mechanical strength, elasticity (resilience), and compression set, which is elastic recovery after long-term deformation. In particular, the thermoplastic polyester elastomer resins of Examples 1 to 6, in which the reactive compatibilizer was employed, had excellent mechanical strength and a high molecular weight, thereby having the desired intrinsic viscosity.

In contrast, the thermoplastic polyester elastomer resin of Comparative Example 1, in which PO3G was used alone, was poor in elasticity and elastic recovery despite good mechanical strength, and the thermoplastic polyester elastomer resin of Comparative Example 2, in which EO-PPG was used alone, was significantly poor in mechanical strength.

## Claims

**1.** A thermoplastic polyester elastomer resin, which comprises a first polyester elastomer resin comprising a repeat unit (a) represented by the following Formula 1 and a repeat unit (b) represented by the following Formula 2; and a second polyester elastomer resin comprising a repeat unit (a) represented by the following Formula 1 and a repeat unit (c) represented by the following Formula 3:

[Formula 1]

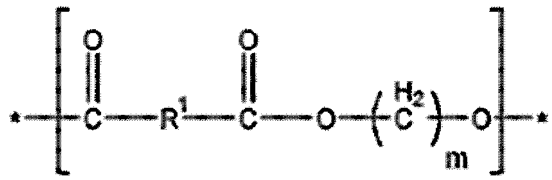

[Formula 2]

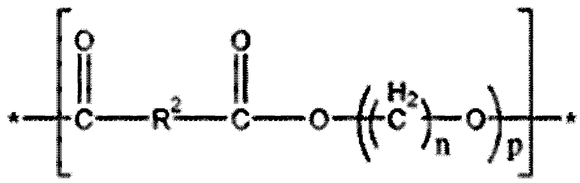

[Formula 3]

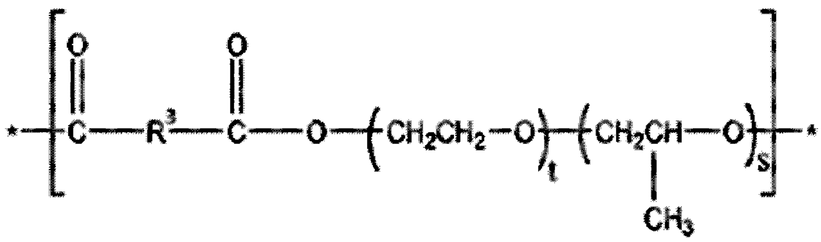

in Formulae 1 to 3, $R^1$ to $R^3$ are each independently a $C_1$ to $C_{12}$ linear, branched, or cyclic divalent aliphatic hydrocarbon group; or a $C_6$ to $C_{12}$ divalent aromatic hydrocarbon group, m is an integer of 2 to 6, n is an integer of 2 to 3, p is an integer of 10 to 30, t is an integer of 1 to 30, and s is an integer of 1 to 40.

**2.** The thermoplastic polyester elastomer resin of claim 1, wherein the thermoplastic polyester elastomer resin further comprises a reactive compatibilizer, a bonding structure derived from a reactive compatibilizer, or a combination thereof.

**3.** The thermoplastic polyester elastomer resin of claim 2, wherein the reactive compatibilizer is a compound having a glycidyl group or a compound having a maleic anhydride structure.

**4.** The thermoplastic polyester elastomer resin of claim 2, wherein the reactive compatibilizer is poly(ethylene-co-methyl acrylate-co-glycidyl methacrylate) or poly(ethylene-co-ethyl acrylate-co-maleic anhydride).

**5.** The thermoplastic polyester elastomer resin of claim 2, wherein the amount of the reactive compatibilizer used is 0.1 to 10% by weight based on the total weight of the thermoplastic polyester elastomer resin.

**6.** The thermoplastic polyester elastomer resin of claim 1, wherein the blending ratio of the first polyester elastomer resin and the second polyester elastomer resin is a weight ratio of 40:60 to 99:1.

**7.** The thermoplastic polyester elastomer resin of claim 1, which comprises a mixture in which the first polyester elastomer resin and the second polyester elastomer resin are blended, a crosslinked product in which the first polyester elastomer resin and the second polyester elastomer resin are combined, or a combination thereof.

**8.** The thermoplastic polyester elastomer resin of claim 1, wherein the first polyester elastomer resin satisfies the following Relationship 1:

$$[\text{Relationship 1}]$$

$$0.5 \leq a/b \leq 3.0$$

in Relationship 1, a is the weight accounted for by the repeat unit (a) represented by Formula 1 in the first polyester elastomer resin, and b is the weight accounted for by the repeat unit (b) represented by Formula 2 in the first polyester elastomer resin.

**9.** The thermoplastic polyester elastomer resin of claim 1, wherein the second polyester elastomer resin satisfies the following Relationship 2:

$$[\text{Relationship 2}]$$

$$0.5 \leq a/c \leq 2.5$$

in Relationship 2, a is the weight accounted for by the repeat unit (a) represented by Formula 1 in the second polyester elastomer resin, and c is the weight accounted for by the repeat unit (c) represented by Formula 3 in the second polyester elastomer resin.

**10.** The thermoplastic polyester elastomer resin of claim 1, which satisfies the following Relationship 3:

$$[\text{Relationship 3}]$$

$$0.5 \leq (y + z)/x \leq 3.0$$

in Relationship 3, x is the total weight accounted for by the repeat unit (a) represented by Formula 1 in the thermoplastic polyester elastomer resin, y is the total weight accounted for by the repeat unit (b) represented by Formula 2 in the thermoplastic polyester elastomer resin, and z is the total weight accounted for by the repeat unit (c) represented by Formula 3 in the thermoplastic polyester elastomer resin.

**11.** The thermoplastic polyester elastomer resin of claim 1, which satisfies the following Relationship 4:

$$[\text{Relationship 4}]$$

$$0.3 \leq y/z \leq 37$$

in Relationship 4, y is the total weight accounted for by the repeat unit (b) represented by Formula 2 in the thermoplastic polyester elastomer resin, and z is the total weight accounted for by the repeat unit (c) represented by Formula 3 in the thermoplastic polyester elastomer resin.

**12.** The thermoplastic polyester elastomer resin of claim 1, which has a tensile strength of 190 $kgf/cm^2$ or more when measured in accordance with ASTM D638.

**13.** The thermoplastic polyester elastomer resin of claim 1, which satisfies the following Relationship 5:

$$[\text{Relationship 5}]$$

$$H/R \leq 0.97$$

in Relationship 5, H is the Shore D hardness of the thermoplastic polyester elastomer resin as measured in accordance with ASTM D2240, and R is the resilience of the thermoplastic polyester elastomer resin as measured in accordance with ASTM D2632.

**14.** The thermoplastic polyester elastomer resin of claim 1, which satisfies the following Relationship 6:

[Relationship 6]

$$0.6 \leq H/CS$$

in Relationship 6, H is the Shore D hardness of the thermoplastic polyester elastomer resin as measured in accordance with ASTM D2240, and CS is the compression set of the thermoplastic polyester elastomer resin as measured in accordance with ISO 816 Method B.

**15.** The thermoplastic polyester elastomer resin of claim 1, wherein the repeat unit (a) represented by Formula 1 is derived from a reaction of a glycol component comprising 1,4-butanediol; and a dicarboxylic acid component,

the repeat unit (b) represented by Formula 2 is derived from a reaction of a dicarboxylic acid component; and a high molecular weight glycol component comprising polytrimethylene ether glycol, and
the repeat unit (c) represented by Formula 3 is derived from a reaction of a dicarboxylic acid component; and a high molecular weight glycol component comprising ethylene oxide-adducted polypropylene glycol.

**16.** The thermoplastic polyester elastomer resin of claim 15, wherein the dicarboxylic acid component comprises at least one selected from the group consisting of terephthalic acid and dimethyl terephthalate.

**17.** The thermoplastic polyester elastomer resin of claim 15, wherein the number average molecular weight of the high molecular weight glycol component comprising polytrimethylene ether glycol and the number average molecular weight of the high molecular weight glycol component comprising ethylene oxide-adducted polypropylene glycol are each 400 to 5,000 g/mole.

**18.** A process for preparing a thermoplastic polyester elastomer resin, which comprises:

(1-1) reacting a first glycol component, a first dicarboxylic acid component, and a first high molecular weight glycol component to obtain a first polyester elastomer resin;
(1-2) reacting a second glycol component, a second dicarboxylic acid component, and a second high molecular weight glycol component to obtain a second polyester elastomer resin; and
(1-3) melt-kneading the first polyester elastomer resin and the second polyester elastomer resin,
wherein the first polyester elastomer resin comprises a repeat unit (a) represented by the following Formula 1 and a repeat unit (b) represented by the following Formula 2; and the second polyester elastomer resin comprises a repeat unit (a) represented by the following Formula 1 and a repeat unit (c) represented by the following Formula 3:

[Formula 1]

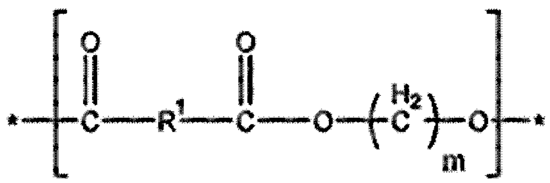

[Formula 2]

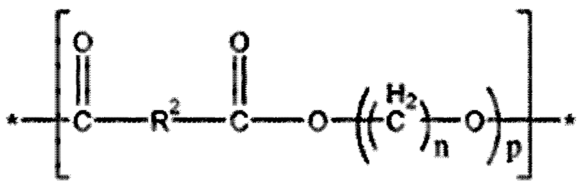

[Formula 3]

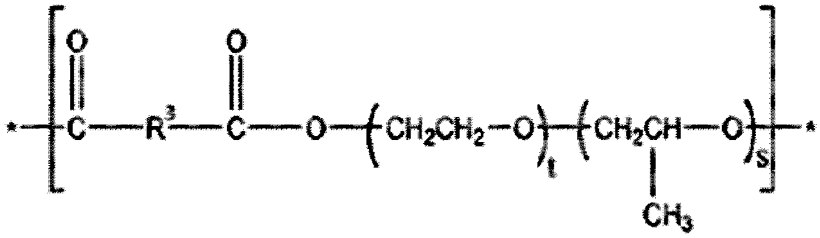

in Formulae 1 to 3, $R^1$ to $R^3$ are each independently a $C_1$ to $C_{12}$ linear, branched, or cyclic divalent aliphatic hydrocarbon group; or a $C_6$ to $C_{12}$ divalent aromatic hydrocarbon group, m is an integer of 2 to 6, n is an integer of 2 to 3, p is an integer of 10 to 30, t is an integer of 1 to 30, and s is an integer of 1 to 40.

**19.** The process for preparing a thermoplastic polyester elastomer resin of claim 18, wherein the melt-kneading in step (1-3) is carried out in the presence of a reactive compatibilizer.

**20.** The process for preparing a thermoplastic polyester elastomer resin of claim 18, wherein the first glycol component and the second glycol component each comprise 1,4-butanediol,

the first high molecular weight glycol component comprises polytrimethylene ether glycol, and
the second high molecular weight glycol component comprises ethylene oxide-adducted polypropylene glycol.

**21.** A composition, which comprises the thermoplastic polyester elastomer resin according to any one of claims 1 to 17.

**22.** An article, which comprises the thermoplastic polyester elastomer resin according to any one of claims 1 to 17.

**23.** The article of claim 22, wherein the article is a fiber, a foam, or a shoe part.

## INTERNATIONAL SEARCH REPORT

International application No.
**PCT/KR2024/012053**

**A. CLASSIFICATION OF SUBJECT MATTER**

**C08L 67/02**(2006.01)i; **C08L 51/04**(2006.01)i; **C08G 63/183**(2006.01)i; **C08G 63/672**(2006.01)i

According to International Patent Classification (IPC) or to both national classification and IPC

**B. FIELDS SEARCHED**

Minimum documentation searched (classification system followed by classification symbols)

C08L 67/02(2006.01); C08G 18/42(2006.01); C08G 63/672(2006.01); C08K 5/13(2006.01); C08L 67/00(2006.01); C08L 67/03(2006.01); F16J 15/10(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 엘라스토머 (elastomer), 폴리트리메틸렌에테르 글리콜(polytrimethylene ether glycol, PO3G), 에틸렌옥사이드 부가 폴리프로필렌글리콜(EO-PPG)

**C. DOCUMENTS CONSIDERED TO BE RELEVANT**

| Category* | Citation of document, with indication, where appropriate, of the relevant passages | Relevant to claim No. |
|---|---|---|
| Y | US 2005-0282966 A1 (SUNKARA, H. B. et al.) 22 December 2005 (2005-12-22)<br>See claims 1 and 4; and paragraphs [0012]-[0021], [0069] and [0087]. | 1-23 |
| Y | JP 2011-132293 A (DU PONT-TORAY CO., LTD.) 07 July 2011 (2011-07-07)<br>See claim 1; paragraphs [0038]-[0046]; and table 1. | 1-23 |
| Y | KR 10-1242686 B1 (KOLON PLASTICS, INC.) 12 March 2013 (2013-03-12)<br>See claims 1 and 3; and paragraph [0033]. | 2-5,19 |
| A | JP 02-283759 A (DU PONT TORAY CO., LTD.) 21 November 1990 (1990-11-21)<br>See claim 1; and pages 4 and 5. | 1-23 |
| A | JP 2990437 B2 (DU PONT TORAY CO., LTD.) 13 December 1999 (1999-12-13)<br>See claim 1; page 3, lines 3-4 and pages 6-7, and example 1. | 1-23 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 November 2024** | **20 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
PCT/KR2024/012053

C. DOCUMENTS CONSIDERED TO BE RELEVANT

| Category* | Citation of document, with indication, where appropriate, of the relevant passages | Relevant to claim No. |
|---|---|---|
| A | JP 62-235319 A (TORAY DU PONT KK) 15 October 1987 (1987-10-15) See claim 1; and example 1. | 1-23 |

Form PCT/ISA/210 (second sheet) (July 2022)

**INTERNATIONAL SEARCH REPORT**
**Information on patent family members**

International application No.
**PCT/KR2024/012053**

| Patent document cited in search report | Publication date (day/month/year) | Patent family member(s) | Publication date (day/month/year) |
|---|---|---|---|
| US 2005-0282966 A1 | 22 December 2005 | CA 2571511 A1 | 26 January 2006 |
| | | CN 101006120 A | 25 July 2007 |
| | | EP 1765919 A1 | 28 March 2007 |
| | | JP 2008-503644 A | 07 February 2008 |
| | | KR 10-2007-0028557 A | 12 March 2007 |
| | | TW 200617071 A | 01 June 2006 |
| | | TW I372770 B | 21 September 2012 |
| | | US 2008-0255300 A1 | 16 October 2008 |
| | | US 7422795 B2 | 09 September 2008 |
| | | WO 2006-009758 A1 | 26 January 2006 |
| JP 2011-132293 A | 07 July 2011 | JP 5424171 B2 | 26 February 2014 |
| KR 10-1242686 B1 | 12 March 2013 | KR 10-2009-0062785 A | 17 June 2009 |
| JP 02-283759 A | 21 November 1990 | JP 2665558 B2 | 22 October 1997 |
| JP 2990437 B2 | 13 December 1999 | JP 02-269118 A | 02 November 1990 |
| JP 62-235319 A | 15 October 1987 | JP 05-066405 B2 | 21 September 1993 |

Form PCT/ISA/210 (patent family annex) (July 2022)